(19) **Europäisches Patentamt / European Patent Office / Office européen des brevets**

(11) **EP 4 542 676 A1**

(12) **EUROPEAN PATENT APPLICATION**
published in accordance with Art. 153(4) EPC

(43) Date of publication:
**23.04.2025 Bulletin 2025/17**

(21) Application number: **23904087.6**

(22) Date of filing: **15.12.2023**

(51) International Patent Classification (IPC):
$H01M\ 4/139$ (2010.01)   $H01M\ 4/38$ (2006.01)
$H01M\ 4/62$ (2006.01)   $H01M\ 4/48$ (2010.01)
$H01M\ 4/13$ (2010.01)   $H01M\ 10/052$ (2010.01)
$H01M\ 4/02$ (2006.01)

(52) Cooperative Patent Classification (CPC):
H01M 4/02; H01M 4/13; H01M 4/134; H01M 4/139;
H01M 4/38; H01M 4/48; H01M 4/62; H01M 10/052;
Y02E 60/10

(86) International application number:
**PCT/KR2023/095115**

(87) International publication number:
**WO 2024/128888 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 KR 20220177386**

(71) Applicant: **LG Energy Solution, Ltd.
Seoul 07335 (KR)**

(72) Inventors:
• **KIM, Dohyeun**
  **Daejeon 34122 (KR)**
• **KIM, Donghyuk**
  **Daejeon 34122 (KR)**
• **LEE, Yong Ju**
  **Daejeon 34122 (KR)**
• **JUN, Hyunmin**
  **Daejeon 34122 (KR)**

(74) Representative: **Hoffmann Eitle
Patent- und Rechtsanwälte PartmbB
Arabellastraße 30
81925 München (DE)**

(54) **ANODE COMPOSITION, ANODE COMPRISING SAME FOR LITHIUM SECONDARY BATTERY, AND LITHIUM SECONDARY BATTERY COMPRISING SAME ANODE**

(57)   The present application relates to a negative electrode composition, a negative electrode for a lithium secondary battery, and a lithium secondary battery including the negative electrode.

[Figure 1]

EP 4 542 676 A1

**Description**

[Technical Field]

This application claims priority to and the benefit of Korean Patent Application No. 10-2022-0177386 filed in the Korean Intellectual Property Office on December 16, 2022, the entire contents of which are incorporated herein by reference.

The present application relates to a negative electrode composition, a negative electrode for a lithium secondary battery including the same, and a lithium secondary battery including the negative electrode.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, recently, in response to the demand for a high-density energy battery, studies have been actively conducted on a method for increasing the capacity by using a silicon-based compound such as Si/C or $SiO_x$, which has a 10-fold higher capacity than a graphite-based material, as a negative electrode active material. However, a silicon-based compound, which is a high-capacity material, has a large capacity compared to graphite that is currently used, but has a problem in that the volume expands rapidly during the charging process to disconnect the conductive path, thereby degrading the battery characteristics.

Thus, to solve problems when the silicon-based compound is used as a negative electrode active material, measures to adjust the driving potential, additionally, measures to suppress the volume expansion itself such as methods of further coating the active material layer with a thin film and methods of adjusting the particle diameter of the silicon-based compound, various measures to prevent the conductive path from being disconnected, and the like have been discussed, but there is a limitation in the application of the measures because the performance of a battery may rather deteriorate, so that there is still a limitation in the commercialization of preparation of a battery having a negative electrode with a high content of the silicon-based compound.

Further, in the case of an electrodes in which a graphite-based or graphite-silicon composite is used as an active material, the electrode is manufactured by adding a dotted conductive material, but the existing dotted conductive material reacts with lithium to increase the diffusion resistance of Li ions by blocking pores in the electrode structure, and such resistance causes a difference in the degree of deterioration of the electrode during the lithium intercalation/de-intercalation reaction between the upper and lower ends of the electrode.

Therefore, in the process of manufacturing a silicon-based negative electrode for maximizing capacitance characteristics, there is a need for research on an electrode capable of maximizing the diffusion of Li ions while equally maintaining the porosity of the electrode.

<Related Art Document>

(Patent Document 1) Japanese Patent Application Laid-Open No. 2009-080971

[Detailed Description of the Invention]

[Technical Problem]

Although various types of negative electrode conductive materials have been used to maintain conductive paths, the aforementioned problems remain unsolved. Thus, when a linear conductive material is added thereto in order to include a pore securing material in a negative electrode composition for removing a dotted conductive material, which is an existing conductive material, and simultaneously securing pores in an electrode, and to complement the pore securing material, which is a non-conductor as a conductive material, it has been found that the aforementioned problems can be solved.

Thus, the present application relates to a negative electrode composition capable of solving the above problems, a negative electrode for a lithium secondary battery, including the same, and a lithium secondary battery including the negative electrode.

[Technical Solution]

An exemplary embodiment of the present specification provides a negative electrode composition including: a silicon-based active material; a pore securing material; a linear conductive material; and a negative electrode binder, wherein the silicon-based active material includes one or more selected from the group consisting of SiOx (x=0) and SiOx (0<x<2), and includes the SiOx (x=0) in an amount of 90 parts by weight or more based on 100 parts by weight of the silicon-based active material, the pore securing material is included in an amount of 0.1 parts by weight or more and 20 parts by weight or less based on 100 parts by weight of the negative electrode composition, and the weight ratio of the linear conductive material : the pore securing material is 1 : 10 to 1 : 120.

Another exemplary embodiment has been made in an effort to provide a negative electrode for a lithium secondary battery, including: a negative electrode current collector layer; and a negative electrode active material layer including the negative electrode composition according to the present application formed on one surface or both surfaces of the negative electrode current collector layer.

Finally, the present specification has been made in an effort to provide a lithium secondary battery including: a positive electrode; the negative electrode for a lithium secondary battery according to the present application; a separator provided between the positive electrode and the negative electrode; and an electrolyte.

[Advantageous Effects]

The negative electrode composition according to the present application is characterized by adding a porosity securing material capable of maximizing the diffusion of lithium ions while maintaining the porosity of the electrode. Accordingly, as the dotted conductive material, which is an existing conductive material, is removed and a pore securing material is used, the pore securing material is located between particles in the electrode, so that there is an advantage in that it is possible to secure pores capable of generating the diffusion of lithium ions.

In addition, the aforementioned pore securing material is a non-conductor, and is characterized by using a certain part by content to secure pores and additionally including a linear conductive material to complement the pore securing material and lower the electrode resistance. Accordingly, the pore securing material has characteristics capable of maintaining pores even during the intercalation and de-intercalation of lithium in an electrode of pure Si, and also securing conductivity and lowering the electrode resistance.

That is, the negative electrode composition according to the present invention is mainly characterized in that in a negative electrode to which a silicon-based active material is applied in order to maximize the capacity, a certain content of a pore securing material is used in order to simplify the pore structure, which is a problem of pure Si, and the conductive network problem caused by this has been solved by including a specific content of a linear conductive material.

[Brief Description of Drawings]

FIG. 1 is a view illustrating the stacking structure of a negative electrode for a lithium secondary battery according to an exemplary embodiment of the present application.
FIG. 2 is a view illustrating the stacking structure of a lithium secondary battery according to an exemplary embodiment of the present application.
FIG. 3 is a view illustrating a 4-point probe device for calculating electrode conductivity.

<Explanation of Reference Numerals and Symbols>

10: Negative electrode current collector layer
20: Negative electrode active material layer

30: Separator
40: Positive electrode active material layer
50: Positive electrode current collector layer
60: External probe
70: Internal probe
100: Negative electrode for lithium secondary battery
200: Positive electrode for lithium secondary battery

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.

In the present specification, **"Dn"** means the particle size distribution, and means the particle size at the n% point of the cumulative distribution of the number of particles according to the particle size. That is, D50 is the particle size (median particle size) at the 50% point of the cumulative distribution of the number of particles according to the particle size, D90 is the particle size at the 90% point of the cumulative distribution of the number of particles according to the particle size, and D10 is the particle size at the 10% point of the cumulative distribution of the number of particles according to the particle size. Meanwhile, the median particle size may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In an exemplary embodiment of the present application, the particle size or particle diameter may mean the average diameter or representative diameter of each grain forming a particle.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode composition including: a silicon-based active material; a pore securing material; a linear conductive material; and a negative electrode binder, wherein the silicon-based active material includes one or more selected from the group consisting of SiOx (x=0) and SiOx (0<x<2), and includes the SiOx (x=0) in an amount of 90 parts by weight or more based on 100 parts by weight of the silicon-based active material, the pore securing material is included in an amount of 0.1 parts by weight or more and 20 parts by weight or less based on 100 parts by weight of the negative electrode composition, and the weight ratio of the linear conductive material : the pore securing material is 1 : 10 to 1 : 120.

The negative electrode composition according to the present invention is mainly characterized in that in a negative electrode to which a silicon-based active material is applied in order to maximize the capacity, a certain content of a pore securing material is used in order to simplify the pore structure, which is a problem of pure Si, and the conductive network problem caused by this has been solved by including a specific content of a linear conductive material.

Hereinafter, the negative electrode composition according to the present application will be described in detail.

In an exemplary embodiment of the present application, the silicon-based active material includes one or more selected from the group consisting of SiOx (x=0) and SiOx (0<x<2), and may include 90 parts by weight or more of the SiOx (x=0) based on 100 parts by weight of the silicon-based active material.

In another exemplary embodiment, the SiOx (x=0) may be included in an amount of 90 parts by weight or more, preferably 92 parts by weight or more, and more preferably 93 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present application, the silicon-based active material may be SiOx (x=0) .

In an exemplary embodiment of the present application, for the silicon-based active material, particularly, pure silicon (Si) may be used as the silicon-based active material. The use of pure silicon (Si) as the silicon-based active material may mean that based on the total 100 parts by weight of the silicon-based active material as described above, pure Si (SiOx (x=0)), which is not bound to other particles or elements, is included in the above range.

That is, the silicon-based active material according to the present application uses pure Si and has a characteristic of having a higher capacity capable of securing lithium than when SiOx (0<x<2) is used. Accordingly, the rapid charging ability and capacity characteristics may be excellent, but a negative electrode of pure Si may have problems such as securing of pores, so that the silicon-based active material according to the present application is mainly characterized by including the above-described pore securing material and linear conductive material.

Meanwhile, the silicon-based active material of the present invention may have an average particle diameter (D50) of 5 $\mu$m to 10 $\mu$m, specifically 5.5 $\mu$m to 8 $\mu$m, and more specifically 6 $\mu$m to 7 $\mu$m. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the phenomenon of the non-uniform current density during charging and discharging.

In an exemplary embodiment of the present application, the silicon-based active material generally has a characteristic BET specific surface area. The BET specific surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET specific surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, provided is a negative electrode composition including the silicon-based active material in an amount of 60 parts by weight or more based on 100 parts by weight of the negative electrode composition.

In another exemplary embodiment of the present application, the silicon-based active material may be included in an amount of 60 parts by weight or more and 95 parts by weight or less based on 100 parts by weight of the negative electrode composition.

In still another exemplary embodiment, the silicon-based active material may be included in an amount of 60 parts by weight or more, preferably 60.5 parts by weight or more, and more preferably 61 parts by weight or more, and may be included in an amount of 95 parts by weight or less, preferably 90 parts by weight or less, and more preferably 85 parts by weight or less, based on 100 parts by weight of the negative electrode composition.

The negative electrode composition according to the present application uses a silicon-based active material with a remarkably high capacity within the above range. That, when the silicon-based active material is used in excess of the above range, even though the combination of the linear conductive material and the pore securing material of the present invention is used, the service life characteristics cannot be determined, and rather the cell performance evaluation results are poor, and when the silicon-based active material is used in an amount less than the above range, the service life characteristics can be secured, but the capacity characteristics and energy density are greatly reduced, so that when a negative electrode with the same capacity is manufactured, the thickness of the active material layer increases, and the rapid charging performance is also poor.

The present application is characterized by optimizing the content of a linear conductive material and a pore securing material to be described below by using a silicon-based active material within the aforementioned range to the extent that volume expansion can be controlled and simultaneously, capacity characteristics can be maximized.

In an exemplary embodiment of the present application, the silicon-based active material may have a non-circular form, and the circularity thereof is, for example, 0.9 or less, for example 0.7 to 0.9, for example, 0.8 to 0.9, and for example, 0.85 to 0.9.

In the present application, the circularity is determined by the following Equation 1, where A is the area and P is the boundary line.

$$[\text{Equation 1}]$$

$$4\pi A/P^2$$

In an exemplary embodiment of the present application, the negative electrode composition may include a pore securing material.

When a silicon-based active material as described above is used, the intercalation and de-intercalation of lithium need to occur uniformly at the upper and lower ends of the electrode in order to secure service life stability. However, when a dotted conductive material is used as an existing conductive material, the diffusion resistance of lithium ions is increased by preventing pores in the electrode structure, and this resistance causes a difference in the degree of deterioration of the electrode during the intercalation and de-intercalation reaction of lithium at the upper and lower ends of the electrode.

In order to solve the aforementioned problems, the negative electrode composition according to the present application is characterized in that a dotted conductive material is removed and a pore securing material is included in an amount of 0.1 parts by weight or more and 20 parts by weight or less based on 100 parts by weight of the negative electrode composition.

In an exemplary embodiment, the negative electrode composition according to the present application is characterized by including a pore securing material in an amount of 0.1 parts by weight or more and 20 parts by weight or less, preferably 0.5 parts by weight or more and 19 parts by weight or less, and more preferably 0.7 parts by weight or more and 19 parts by weight or less based on 100 parts by weight of the negative electrode composition.

That is, the negative electrode composition according to the present application has an advantage in that it is possible to secure pores between the particles, and it is possible to secure a pore structure in which the diffusion of lithium ions may occur by including a pore securing material that is not reactive with lithium ions in the above parts by weight.

Furthermore, the pore securing material may be metal oxide particles which are non-conductors.

In particular, when the aforementioned pore securing material is used, lithium ions may be uniformly dispersed in the electrode by securing a lithium ion path in the electrode even when a side reaction layer is partially formed in the active material, and as the pore securing material is included in the parts by content, the negative electrode composition according to the present application has a characteristic that it is possible to secure the service life stability of the electrode by inducing a uniform reaction at the upper and lower ends of the electrode.

In an exemplary embodiment of the present application, provided is a negative electrode composition in which the pore securing material is an inorganic oxide which has low reactivity with lithium compared to the silicon-based active material. That is, the pore securing material may be an inorganic oxide that has low or no reactivity with lithium compared to the silicon-based active material.

In an exemplary embodiment of the present application, the pore securing material may exhibit an amorphous or crystalline form.

In an exemplary embodiment of the present application, the pore securing material is composed of a non-transition metal and an oxide, or is composed of an oxide having low reactivity with lithium ions, so that even though charging and discharging between the lithium ion and the silicon-based active material are performed, any oxide can be used without limitation as long as it is an oxide that does not change its composition or structure due to the band structure between the electrode and the electrolyte.

In an exemplary embodiment of the present application, the pore securing material may be $Al_2O_3$; CaO; $CeO_2$; MgO; or $ZrO_2$, but is not limited thereto as long as it can be used to secure the above-described pores in the negative electrode.

In the related art, it was common to use only a graphite-based compound as a negative electrode active material, but recently, as the demand for a high-capacity battery has increased, attempts to mix and use a silicon-based active material have been increased in order to increase the capacity. However, in the case of the silicon-based active material, even though characteristics of the silicon-based active material itself are partially adjusted as described above, the volume rapidly expands in the process of charging and discharging, so that a problem in that a conductive path formed in the negative electrode active material layer is impaired may occur in some cases.

Furthermore, when the pore securing material is used in the above parts by weight while removing the dotted conductive material as described above the above-mentioned weight part, it may be difficult to secure a conductive path because the pore securing material exhibits the characteristics of a non-conductor.

Therefore, the present application may include a linear conductive material as a negative electrode composition, thereby having characteristics capable of complementing a pore securing material, which is a non-conductor, and simultaneously lowering the electrode resistance.

Generally, an existing silicon-based negative electrode may include a dotted conductive material; and a planar conductive material.

In an exemplary embodiment of the present application, provided is a negative electrode composition further including a negative electrode conductive material, in which the negative electrode conductive material is included in an amount of 5 parts by weight or more and 15 parts by weight or less based on 100 parts by weight of the negative electrode composition.

In another exemplary embodiment, the negative electrode conductive material may be included in an amount of 5 parts by weight or more and 15 parts by weight or less, preferably 13 parts by weight or less, and 5 parts by weight or more, specifically 7 parts by weight or more, based on 100 parts by weight of the negative electrode composition.

In this case, the negative electrode conductive material may include: a dotted conductive material; or a planar conductive material.

The dotted conductive material may be used to enhance the conductivity of the negative electrode, and means a conductive material having conductivity in a spherical or dot form without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

The planar conductive material may increase the surface contact between silicon particles in the negative electrode to improve conductivity and simultaneously suppress the disconnection of the conductive path due to the volume expansion, and may be expressed as a plate-like conductive material or bulk-type conductive material. The planar conductive material may include at least one selected from the group consisting of plate-like graphite, graphene, graphene oxide, and graphite flake, and may be preferably plate-like graphite.

First, when carbon black is used as a dotted conductive material in a silicon-based negative electrode, there is an advantage of being inexpensive in the process, but in order to fulfill the role, carbon black needs to be included in a high proportion in the negative electrode composition. Since such a high proportion of dotted conductive material needs to be used, gas generation at high temperatures has become a problem, and there occurred a problem in that the stability of the negative electrode deteriorates according to gas generation.

In addition, plate-like graphite used as a planar conductive material has characteristics capable of forming a conductive network between active materials because it has an appropriate price, has a suitable rigidity, and plays a role as a buffer in roll-pressing silicon-based negative electrodes due to the soft form, and also has a high specific surface area. However, a planar conductive material needs to include a certain amount or more compared to the silicon-based active material used, so that despite having the aforementioned properties, there is a limitation in including a high content of silicon-based active material in the negative electrode active material, which makes it impossible to maximize the capacity characteristics.

An exemplary embodiment of the present application is characterized in that in particular, the linear conductive material includes SWCNT; and MWCNT.

In the present application, the SWCNT may have a specific area of 900 $m^2$/g to 1500 $m^2$/g and a mean diameter of 0.5 $\mu$m or more and 3 $\mu$m or less.

The SWCNT is long and has a high specific surface area as described above, and thus, has the most effective characteristics for forming a conductive network between silicon-based active materials. However, SWCNT has a disadvantage of being very expensive, and when an excessive amount of SWCNT is applied, a SWCNT dispersing agent used together is included, resulting in a decrease in rigidity.

In the present application, the MWCNT may have a specific area of 100 $m^2$/g to 500 $m^2$/g and a mean diameter of 10 $\mu$m or more and 20 $\mu$m or less.

In an exemplary embodiment of the present application, the MWCNT may satisfy the number of walls from 5 to 20.

The MWCNT has a smaller specific surface area than the SWCNT, and is inferior to the SWCNT in terms of length, but corresponds to a material with extremely excellent performance compared to the dotted and planar conductive materials described above.

In the present application, since SWCNT has a high specific surface area and a large aspect ratio, MWCNT is used in a relatively aggregated form (bundle form), and thus, is located on the surface of the silicon-based active material, which makes it difficult to achieve the connections between the active materials. That is, SWCNT is used for long-distance coupling, and MWCNT is used for mixing particle surfaces with binder composites.

In an exemplary embodiment of the present application, provided is a negative electrode composition including the linear conductive material in an amount of 0.1 parts by weight or more and 5 parts by weight or less based on 100 parts by weight of the negative electrode composition.

In another exemplary embodiment, the linear conductive material may be included in an amount of 0.1 parts by weight or more and 5 parts by weight or less, preferably 0.15 parts by weight or more and 4 parts by weight or less, and more preferably 0.15 parts by weight or more and 1.0 part by weight or less, based on 100 parts by weight of the negative electrode composition.

In an exemplary embodiment of the present application, as the negative electrode composition includes a linear conductive material and satisfies the composition and ratio, the negative electrode composition has a feature in which output characteristics at a high C-rate are excellent because the service life characteristics of the existing lithium secondary battery are not greatly affected and points where the battery can be charged and discharged are increased.

In an exemplary embodiment of the present application, provided is a negative electrode composition in which the combined parts by weight of the pore securing material and the linear conductive material are 0.1 parts by weight or more and 30 parts by weight or less based on 100 parts by weight of the negative electrode composition.

In another exemplary embodiment, the combined parts by weight of the pore securing material and the linear conductive material may be 0.1 parts by weight or more and 30 parts by weight or less, preferably 0.5 parts by weight or more and 25 parts by weight or less, and more preferably 0.7 parts by weight or more and 20 part by weight or less, based on 100 parts by weight of the negative electrode composition.

The aforementioned part by weight means the optimum proportion capable of securing pores and conductive paths, and has characteristics in that it is possible to secure capacity characteristics and secure service life characteristics and rapid charging characteristics in a pure Si negative electrode.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, provided is a negative electrode composition in which the negative electrode binder includes one or more selected from the group consisting of a rubber-based binder; and a water-based binder.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, provided is a negative electrode for a lithium secondary battery, in which the negative electrode binder includes a water-based binder, and the negative electrode binder is included in an amount of 5 parts by weight or more and 15 parts by weight or less, based on 100 parts by weight of the negative electrode composition.

In another exemplary embodiment, the negative electrode binder may be included in an amount of 5 parts by weight or more and 15 parts by weight or less, preferably 7 parts by weight or more and 13 parts by weight or less, and more preferably 9 parts by weight or more and 12 parts by weight or less, based on 100 parts by weight of the negative electrode composition.

In an exemplary embodiment of the present application, the negative electrode binder may be included in an amount of 3 parts by weight or more and 10 parts by weight or less based on 100 parts by weight of the silicon-based active material.

In another exemplary embodiment, the negative electrode binder may be included in an amount of 3 parts by weight or more and 10 parts by weight or less, preferably 3.5 parts by weight or more and 10 parts by weight or less, and more preferably 5 parts by weight or more and 10 parts by weight or less, based on 100 parts by weight of the silicon-based active material.

In the case of the negative electrode for a lithium secondary battery according to the present application, a silicon-based active material is used in the parts by weight to maximize the capacity characteristics, and volume expansion during charging and discharging is greater than when an existing carbon-based active material is used as a main active material. Accordingly, the negative electrode for a lithium secondary battery according to the present application has characteristics in that it is possible to efficiently suppress the volume expansion due to charging and discharging of the highly rigid silicon-based active material by including the negative electrode binder in the aforementioned parts by content.

In an exemplary embodiment of the present application, provided is a negative electrode for a lithium secondary battery, including: a negative electrode current collector layer; and a negative electrode active material layer including the negative electrode composition according to the present application formed on one surface or both surfaces of the negative electrode current collector layer.

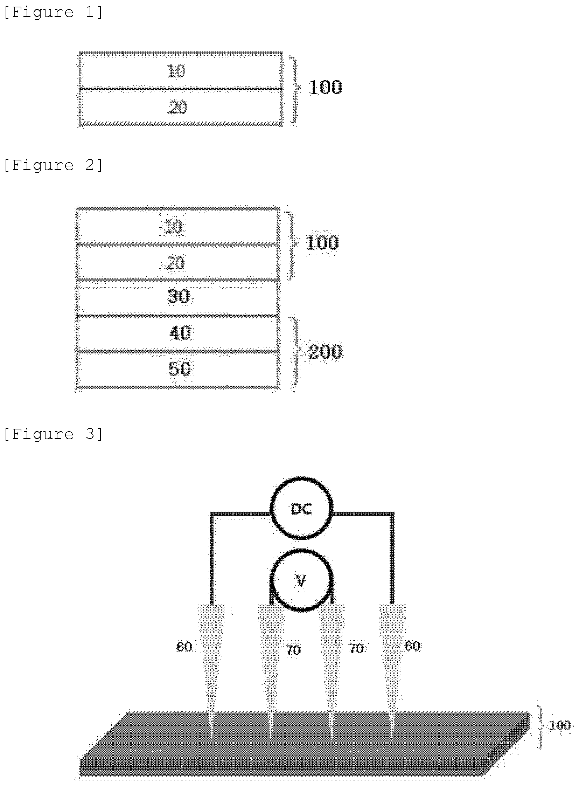

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface, but the negative electrode active material layer may be included on both surfaces of the negative electrode current collector layer.

In an exemplary embodiment of the present application, the negative electrode for a lithium secondary battery may be formed by applying a negative electrode slurry including the negative electrode composition onto one surface or both surfaces of the negative electrode current collector layer and drying the negative electrode slurry.

In this case, the negative electrode slurry may include: the above-described negative electrode composition; and a slurry solvent.

In an exemplary embodiment of the present application, a solid content of the negative electrode slurry may satisfy 5% or more and 55% or less.

In another exemplary embodiment, the solid content of the negative electrode slurry may satisfy a range of 5% or more and 55% or less, preferably 7% or more and 35% or less, and more preferably 10% or more and 30% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer. In addition, the negative electrode composition according to the present application includes a high content of silicon-based active material by including a linear conductive material, and has characteristics in that rapid charging performance and cell performance are excellent.

In an exemplary embodiment of the present application, the slurry solvent can be used without limitation as long as the slurry solvent can dissolve a negative electrode composition, and specifically, water, acetone or NMP may be used.

In an exemplary embodiment of the present application, the negative electrode current collector layer generally has a thickness of 1 μm to 100 μm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 μm or more and 100 μm or less, and the negative electrode active material layer has a thickness of 10 μm or more and 500 μm or less.

In the present application, the negative electrode active material layer may refer to, that is, the thickness of a single-layer negative electrode active material layer when formed on one surface of the negative electrode current collector layer.

However, the thickness may be variously modified depending on the type and use of the negative electrode used, and is not limited thereto.

In an exemplary embodiment of the present application, the porosity of the negative electrode active material layer may satisfy a range of 30% or more and 60% or less.

In another exemplary embodiment, the porosity of the negative electrode active material layer may satisfy a range of 30% or more and 60% or less, preferably 35% or more and 55% or less, and more preferably 39% or more and 54% or less.

The porosity varies depending on the composition and content of the silicon-based active material; the conductive material; and the binder, which are included in the negative electrode active material layer, and in particular, as the silicon-based active material; the pore securing material; and the linear conductive material according to the present application are included in a specific composition and part by content, the above range is satisfied, and accordingly, it is characterized in that electrical conductivity and resistance in the electrode have appropriate ranges.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 2 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 $\mu$m, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Preparation Examples>**

**<Preparation of negative electrode>**

**<Example 1>**

A negative electrode slurry was prepared by adding Si (average particle diameter (D50): 5 $\mu$m) as a silicon-based active material, a pore securing material ($Al_2O_3$), a second conductive material, SWCNT as a linear conductive material, and polyacrylamide (PAM) as a binder at a weight ratio of 79:0.75:10:0.25:10 to distilled water as a solvent for forming a negative electrode slurry (solid concentration of 28 wt%).

The SWCNT satisfied a BET specific surface area of 1000 to 1500 $m^2/g$, had an aspect ratio of 10000 or more, and satisfied a mean diameter of 1.0 $\mu$m or more. As the SWCNT, a solution of SWCNT dispersed in CMC was used. As the second conductive material, plate-like graphite (specific surface area: 17 $m^2/g$, average particle diameter (D50): 3.5 $\mu$m) was used.

After the SWCNT, the second conductive material, the pore securing material, the binder and water were dispersed at 2500 rpm for 30 minutes using a homo mixer as a specific mixing method, the silicon-based active material was added thereto, and then the resulting mixture was dispersed at 2500 rpm for 30 minutes to prepare a negative electrode slurry.

Both surfaces of a copper current collector (thickness: 15 $\mu$m) as a negative electrode current collector layer were coated with the negative electrode slurry in a loading amount of 87.7mg/25 $cm^2$, and the copper current collector was roll-pressed and dried in a vacuum oven at 130°C for 10 hours to form a negative electrode active material layer (thickness: 27 $\mu$m), which was employed as a negative electrode (thickness of the negative electrode: 42 $\mu$m).

A negative electrode was prepared in the same manner as in Example 1, except that the parts by weight in the following Table 1 were changed in Example 1.

[Table 1]

| | | Ratio of SWCNT/pore securing material | Parts by weight of negative electrode slurry (Silicon-based active material:pore securing material: second conductive material: linear conductive material: binder) | Size of pore securing material particles | Crystallinity of pore securing material | Porosity of negative electrode including volume of pore securing material |
|---|---|---|---|---|---|---|
| | Example 1 | 1:3 | 79:0.75:10:0.25:10 | 10nm | Amorphous | 39.97% |
| | Example 2 | 1:3 | 79:0.75:10:0.25:10 | 300nm | Crystalline (gamma) | 39.97% |
| | Example 3 | 1:20 | 75:4.76:10:0.23:10 | 10 nm | Amorphous | 42.33% |
| | Example 4 | 1:20 | 75:4.76:10:0.23:10 | 300 nm | Crystalline (gamma) | 42.33% |
| | Example 5 | 1: 80 | 65:14.81:10:0.19:10 | 10 nm | Amorphous | 46.61% |
| | Example 6 | 1 : 80 | 65:14.81:10:0.19:10 | 300 nm | Crystalline (gamma) | 46.61% |
| | Example 7 | 1:120 | 61:18.84:10:0.16:10 | 10 nm | Amorphous | 53.96% |
| | Example 8 | 1:120 | 61:18.84:10:0.16:10 | 300 nm | Crystalline (gamma) | 53.96% |
| | Comparative Example 1 | 1:1 | 79.5:0.25:10:0.25:10 | 10nm | Amorphous | 39.64% |
| | Comparative Example 2 | 1:1 | 79.5:0.25:10:0.25:10 | 300nm | Crystalline (gamma) | 39.64% |
| | Comparative Example 3 | 1: 130 | 58:22.33:10:0.17:10 | 10 nm | Amorphous | 54.37% |
| | Comparative Example 4 | 1 : 130 | 58:22.33:10:0.17:10 | 300 nm | Crystalline (gamma) | 54.37% |

In Table 1 above, the porosity of the negative electrode including the volume of the pore securing material, was calculated as follows.

$$\text{Porosity of negative electrode} = \left(1 - \sum \frac{\left(\begin{array}{c}\text{Volume of constituent component}\\\text{except for pore securing material}\end{array}\right)}{\text{(Volume of entire electrode)}}\right) * 100(\%)$$

<Comparative Example 5>

A negative electrode slurry was prepared by adding Si (average particle diameter (D50): 5 μm) as a silicon-based active material, SWCNT as a linear conductive material, Carbon Black C (specific surface area: 58 m$^2$/g, diameter: 37 nm), a second conductive material, and polyacrylamide (PAM) as a binder at a weight ratio of 70:9.79:10:0.21:10 to distilled water as a solvent for forming a negative electrode slurry (solid concentration of 28 wt%).

The SWCNT satisfied a BET specific surface area of 1000 to 1500 m$^2$/g, had an aspect ratio of 10000 or more, and satisfied a mean diameter of 1.0 μm or more. As the SWCNT, a solution of SWCNT dispersed in CMC was used.

After the SWCNT, Carbon Black C, the binder and water were dispersed at 2500 rpm for 30 minutes using a homo mixer as a specific mixing method, the silicon-based active material was added thereto, and then the resulting mixture was dispersed at 2500 rpm for 30 minutes to prepare a negative electrode slurry.

Both surfaces of a copper current collector (thickness: 26 μm) as a negative electrode current collector layer were coated with the negative electrode slurry in a loading amount of 87.7 mg/25 cm$^2$, and the copper current collector was roll-pressed and dried in a vacuum oven at 130°C for 10 hours to form a negative electrode active material layer (thickness: 33 μm), which was employed as a negative electrode (thickness of the negative electrode: 41 μm).

<Comparative Example 6>

A negative electrode slurry was prepared by adding Si (average particle diameter (D50): 5 μm) as a silicon-based active material, Carbon Black C (specific surface area: 58 m$^2$/g, diameter: 37 nm), a pore securing material and polyacrylamide (PAM) as a binder at a weight ratio of 70:10:10:10 to distilled water as a solvent for forming a negative electrode slurry (solid concentration of 28 wt%).

After the Carbon black C, the pore securing material, the binder and water were dispersed at 2500 rpm for 30 minutes using a homo mixer as a specific mixing method, the silicon-based active material was added thereto, and then the resulting mixture was dispersed at 2500 rpm for 30 minutes to prepare a negative electrode slurry.

Both surfaces of a copper current collector (thickness: 26 μm) as a negative electrode current collector layer were coated with the negative electrode slurry in a loading amount of 87.7 mg/25 cm$^2$, and the copper current collector was roll-pressed and dried in a vacuum oven at 130°C for 10 hours to form a negative electrode active material layer (thickness: 33 μm), which was employed as a negative electrode (thickness of the negative electrode: 41 μm).

<Experimental Examples>

**Experimental Example 1: Evaluation of service life of monocell**

The secondary batteries including the negative electrodes manufactured in the Examples and the Comparative Examples were subjected to service life evaluation using an electrochemical charger/discharger and the capacity retention rate was evaluated. The secondary batteries were subjected to in-situ cycle test at 4.2-3.0 V 1 C/0.5 C, the capacity retention rates were measured by charging/discharging the secondary batteries at 0.33 C/0.33 C (4.2-3.0 V) every 50 cycles during the test, and the results are shown in Table 2.

Service life retention rate (%) = {(Discharge capacity in the Nth cycle)/(Discharge capacity in the 1st --> cycle)} X 100

[Table 2]

|  | Monocell service life retention rate (1 C/0.5 C, after 200 cycle) |
|---|---|
| Example 1 | 84.2 |
| Example 2 | 84.6 |
| Example 3 | 84.5 |
| Example 4 | 84.9 |
| Example 5 | 84.7 |

(continued)

|  | Monocell service life retention rate (1 C/0.5 C, after 200 cycle) |
|---|---|
| Example 6 | 85.0 |
| Example 7 | 84.1 |
| Example 8 | 84.3 |
| Comparative Example 1 | 83.7 |
| Comparative Example 2 | 83.8 |
| Comparative Example 3 | 82.7 |
| Comparative Example 4 | 82.9 |
| Comparative Example 5 | 84.0 |
| Comparative Example 6 | 80.0 |

**Experimental Example 2: Evaluation of tortuosity**

After a symmetric coin cell with the same electrode as each electrode was manufactured, through electrochemical impedance spectroscopy (EIS) measurement, an ionic resistance ($R_{ion}$) was measured through a section showing a 45° slope in the low frequency section on a Nyquist plot. For these ionic resistances, tortuosity was calculated using the following equation.

$$\tau = R_{ion}\,\varepsilon\,A\,\kappa\,/\,t$$

In the equation, $\tau$ indicates tortuosity, $R_{ion}$ indicates ionic resistance, $\varepsilon$ indicates the porosity of an electrode, A indicates an area of the electrode, $\kappa$ indicates the conductivity of an electrolyte, and t indicates the thickness of the electrode.

[Table 3]

|  | Tortuosity value |
|---|---|
| Example 1 | 4.96 |
| Example 2 | 4.84 |
| Example 3 | 4.79 |
| Example 4 | 4.68 |
| Example 5 | 4.64 |
| Example 6 | 4.22 |
| Example 7 | 4.87 |
| Example 8 | 4.77 |
| Comparative Example 1 | 4.99 |
| Comparative Example 2 | 4.97 |
| Comparative Example 3 | 5.16 |
| Comparative Example 4 | 5.09 |
| Comparative Example 5 | 5 |
| Comparative Example 6 | 5.23 |

The tortuosity evaluation is an index indicating how easily ions can be transferred through the path of the pores in the electrode, and the lower the value, the easier it is for a material participating in the actual electrochemical reaction to permeate into the electrode. In this case, it can be confirmed that the electrode pores can be secured through the pore securing material, and as the porosity increases, the number of paths through which the electrolyte can move is increased and the values at which tortuosity is improved are exhibited. (In the table above, it is determined that the lower the tortuosity value, the more improved the tortuosity)

**Experimental Example 3: Evaluation of initial cycle @SOC50 2.5 C 0.1 s discharge resistance (electrode resistance measurement using monocell)**

After the capacity retention rates were measured by charging/discharging the secondary batteries at 0.33 C/0.33 C (4.2-3.0 V) every 50 cycles during the test in Experimental Example 1, during discharge to 2.5 C pulse in SOC50, the resistance value was measured for a certain period of time (0.1 s), and the results are shown in the following Table 4.

[Table 4]

|  | Measurement of pulse test 0.1s resistance (mohm) |
| --- | --- |
| Example 1 | 292 |
| Example 2 | 287 |
| Example 3 | 286 |
| Example 4 | 274 |
| Example 5 | 271 |
| Example 6 | 265 |
| Example 7 | 293 |
| Example 8 | 291 |
| Comparative Example 1 | 295 |
| Comparative Example 2 | 294 |
| Comparative Example 3 | 317 |
| Comparative Example 4 | 311 |
| Comparative Example 5 | 294 |
| Comparative Example 6 | 325 |

**Experimental Example 4: Evaluation of electrode conductivity measurement**

The electrode resistance was measured as a 4-point probe measurement, and specifically, as can be confirmed in FIG. 3, the resistance was calculated from the current and voltage values by passing a direct current between the two external probes among the four electrodes spaced at the same interval to measure the voltage drop through the two internal probes. Thereafter, the electrode conductivity was calculated using the calculated resistance value and the distance between the probes, and the results were as shown in the following Table 5.

[Table 5]

|  | Measurement of electrode conductivity (mohm) |
| --- | --- |
| Example 1 | 277 |
| Example 2 | 271 |
| Example 3 | 276 |
| Example 4 | 268 |
| Example 5 | 263 |
| Example 6 | 252 |
| Example 7 | 279 |
| Example 8 | 277 |
| Comparative Example 1 | 280 |
| Comparative Example 2 | 279 |

(continued)

|  | Measurement of electrode conductivity (mohm) |
|---|---|
| Comparative Example 3 | 304 |
| Comparative Example 4 | 301 |
| Comparative Example 5 | 279 |
| Comparative Example 6 | 312 |

**Experiment example 5: PC penetration experiment**

By injecting a certain amount (10 ml) of propylene carbonate (PC) through a syringe onto the surface of the electrode punched out in a certain area, PC droplets were allowed to be formed on the surface. Thereafter, after the container was covered in order to prevent the injected PC from evaporating, the time required for the solvent to completely penetrate into the electrode and for the droplets to disappear was compared, and the corresponding results are shown in Table 6.

[Table 6]

|  | Penetration time results (sec) |
|---|---|
| Example 1 | 471 |
| Example 2 | 441 |
| Example 3 | 436 |
| Example 4 | 427 |
| Example 5 | 389 |
| Example 6 | 376 |
| Example 7 | 476 |
| Example 8 | 365 |
| Comparative Example 1 | 481 |
| Comparative Example 2 | 479 |
| Comparative Example 3 | 504 |
| Comparative Example 4 | 483 |
| Comparative Example 5 | 473 |
| Comparative Example 6 | 550 |

As can be confirmed in Examples 1 to 8, the present application is characterized by adding a porosity securing material capable of maximizing the diffusion of lithium ions while maintaining the porosity of the electrode. Accordingly, as the dotted conductive material, which is an existing conductive material, is removed and a pore securing material is used, the pore securing material is located between particles in the electrode, so that there is an advantage in that it is possible to secure pores capable of generating the diffusion of lithium ions.

In addition, the aforementioned pore securing material is a non-conductor, and is characterized by using a certain part by content to secure pores and additionally including a linear conductive material to complement the pore securing material and lower the electrode resistance. Accordingly, the negative electrode composition according to the present application has characteristics capable of maintaining pores even during the intercalation and deintercalation of lithium in an electrode of pure Si, and also securing conductivity and lowering the electrode resistance.

That is, the negative electrode composition according to the present invention is mainly characterized in that in a negative electrode to which a silicon-based active material is applied in order to maximize the capacity, a certain content of a pore securing material is used in order to simplify the pore structure, which is a problem of pure Si, and the conductive network problem caused by this has been solved by including a specific content of a linear conductive material.

Comparative Examples 1 and 2 correspond to the case where the pore securing material is included, but the ratio of the linear conductive material to the pore securing material according to the present application is not satisfied, and Comparative Examples 3 and 4 correspond to the case where the pore securing material is included, but the parts by content exceeds the weight according to the present application. Furthermore, Comparative Example 5 corresponds to the case where no pore securing material is included. Additionally, Comparative Example 6 corresponds to the case where the linear conductive material and the gap securing material are not used, and the dotted conductive material and the pore securing material are used without using the linear conductive material.

It could be confirmed that in such a case, pores between particles could be secured when compared to the Examples, and Comparative Examples 1 and 2 included a small amount of pore securing material which is not reactive with lithium ions, and thus failed to fulfill the role, making it difficult to secure the pore structure, and leading to a poor evaluation result, and Comparative Examples 3 and 4 rather included a large amount of pore securing material, which is a non-conductor, and thus leading to a poor evaluation result because it is difficult to secure conductivity even though a linear conductive material is included.

In the case of Comparative Example 5, it was difficult to secure a desired pore structure because a pore securing material was not used, and Comparative Example 6 is a case where a dotted conductive material was used without using a linear conductive material, and in this case, a side reaction layer is formed in the dotted conductive material at the level of several tens of nanometers, which rather blocks the pores, and as a result, lithium ions cannot enter the lower end of the electrode, resulting in uneven lithium ion distribution at the upper and lower ends. Through these results, it could be confirmed that the upper silicon layer was charged more than the charging depth, causing cracks in the active material and reducing the electrode service life stability.

**Claims**

1. A negative electrode composition comprising: a silicon-based active material; a pore securing material; a linear conductive material; and a negative electrode binder,

   wherein the silicon-based active material comprises one or more selected from the group consisting of SiOx (x=0) and SiOx (0<x<2), and the SiOx (x=0) is comprised in an amount of 90 parts by weight or more based on 100 parts by weight of the silicon-based active material,
   the pore securing material is comprised in an amount of 0.1 parts by weight or more and 20 parts by weight or less, based on 100 parts by weight of the negative electrode composition, and
   the weight ratio of the linear conductive material : the pore securing material is 1:2 to 1:120.

2. The negative electrode composition of claim 1, wherein the silicon-based active material is comprised in an amount of 60 parts by weight or more based on 100 parts by weight of the negative electrode composition.

3. The negative electrode composition of claim 1, wherein the combined parts by weight of the pore securing material and the linear conductive material are 0.1 parts by weight or more and 30 parts by weight or less based on 100 parts by weight of the negative electrode composition.

4. The negative electrode composition of claim 1, wherein the linear conductive material is comprised in an amount of 0.1 parts by weight or more and 5 parts by weight or less based on 100 parts by weight of the negative electrode composition.

5. The negative electrode composition of claim 1, wherein the linear conductive material is SWCNT; or MWCNT.

6. The negative electrode composition of claim 5, wherein the MWCNT has a specific surface area of 100 $m^2$/g to 500 $m^2$/g, and
   a mean diameter of 10 $\mu$m or more and 20 $\mu$m or less.

7. The negative electrode composition of claim 5, wherein the SWCNT has a specific surface area of 900 $m^2$/g to 1500 $m^2$/g, and
   a mean diameter of 0.5 $\mu$m or more and 3 $\mu$m or less.

8. The negative electrode composition of claim 1, wherein the negative electrode binder comprises one or more selected from the group consisting of a rubber-based binder; and a water-based binder.

9. The negative electrode composition of claim 1, further comprising a negative electrode conductive material, wherein the negative electrode conductive material is comprised in an amount of 5 parts by weight or more and 15 parts by weight or less, based on 100 parts by weight of the negative electrode composition.

EP 4 542 676 A1

**10.** The negative electrode composition of claim 1, wherein the pore securing material is an inorganic oxide which has low reactivity with lithium compared to the silicon-based active material.

**11.** A negative electrode for a lithium secondary battery, comprising:

a negative electrode current collector layer; and
a negative electrode active material layer comprising the negative electrode composition according to any one of claims 1 to 10 formed on one surface or both surfaces of the negative electrode current collector layer.

**12.** The negative electrode of claim 11, wherein the negative electrode current collector layer has a thickness of 1 $\mu$m or more and 100 $\mu$m or less, and
the negative electrode active material layer has a thickness of 10 $\mu$m or more and 500 $\mu$m or less.

**13.** The negative electrode of claim 11, wherein the negative electrode active material layer has a porosity of 30% or more and 60% or less.

**14.** A lithium secondary battery comprising:

a positive electrode;
the negative electrode for a lithium secondary battery according to claim 11;
a separator provided between the positive electrode and the negative electrode; and
an electrolyte.

[Figure 1]

[Figure 2]

[Figure 3]

## INTERNATIONAL SEARCH REPORT

| International application No. |
|---|
| **PCT/KR2023/095115** |

### A. CLASSIFICATION OF SUBJECT MATTER

**H01M 4/139**(2010.01)i; **H01M 4/38**(2006.01)i; **H01M 4/62**(2006.01)i; **H01M 4/48**(2010.01)i; **H01M 4/13**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/139(2010.01); H01M 10/052(2010.01); H01M 10/0568(2010.01); H01M 4/134(2010.01); H01M 4/1395(2010.01); H01M 4/36(2006.01); H01M 4/48(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 음극(anode), 실리콘계 활물질(silicon-based active material), 공극(porosity), 선형 도전재(linear conductive material)

### C. DOCUMENTS CONSIDERED TO BE RELEVANT

| Category* | Citation of document, with indication, where appropriate, of the relevant passages | Relevant to claim No. |
|---|---|---|
| Y | CN 113422029 A (BTR NEW MATERIAL GROUP CO., LTD. et al.) 21 September 2021 (2021-09-21)<br>See claims 3-4; and paragraphs [0164], [0233]-[0235] and [0257]. | 1-14 |
| Y | KR 10-1908524 B1 (KOREA INSTITUTE OF SCIENCE AND TECHNOLOGY) 16 October 2018 (2018-10-16)<br>See claims 1 and 3; and paragraphs [0037]-[0040] and [0063]. | 1-14 |
| Y | KR 10-2020-0089568 A (LG CHEM, LTD.) 27 July 2020 (2020-07-27)<br>See claim 1; and paragraphs [0044]-[0045], [0117] and [0122]. | 5-9,13 |
| A | KR 10-2021-0042659 A (LG CHEM, LTD.) 20 April 2021 (2021-04-20)<br>See entire document. | 1-14 |
| A | KR 10-2016-0037334 A (SJ ADVANCED MATERIALS CO., LTD.) 06 April 2016 (2016-04-06)<br>See entire document. | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2023/095115** |

| Patent document cited in search report | | | Publication date (day/month/year) | Patent family member(s) | | | Publication date (day/month/year) |
|---|---|---|---|---|---|---|---|
| CN | 113422029 | A | 21 September 2021 | EP | 4170752 | A1 | 26 April 2023 |
| | | | | JP | 2023-535257 | A | 17 August 2023 |
| | | | | KR | 10-2023-0009434 | A | 17 January 2023 |
| | | | | US | 2023-0275213 | A1 | 31 August 2023 |
| | | | | WO | 2023-273726 | A1 | 05 January 2023 |
| KR | 10-1908524 | B1 | 16 October 2018 | KR | 10-2017-0078203 | A | 07 July 2017 |
| | | | | US | 2017-0187032 | A1 | 29 June 2017 |
| KR | 10-2020-0089568 | A | 27 July 2020 | CN | 113692657 | A | 23 November 2021 |
| | | | | EP | 3893295 | A1 | 13 October 2021 |
| | | | | EP | 3893295 | A4 | 16 February 2022 |
| | | | | EP | 3893295 | B1 | 13 March 2024 |
| | | | | KR | 10-2439661 | B1 | 02 September 2022 |
| | | | | US | 2022-0149376 | A1 | 12 May 2022 |
| | | | | WO | 2020-149682 | A1 | 23 July 2020 |
| KR | 10-2021-0042659 | A | 20 April 2021 | None | | | |
| KR | 10-2016-0037334 | A | 06 April 2016 | KR | 10-1665104 | B1 | 13 October 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220177386
- JP 2009080971 A